# EUROPÄISCHE PATENTANMELDUNG

(11) **EP 2 336 501 A2**
(43) Veröffentlichungstag der Anmeldung: **22.06.2011**
(21) Anmeldenummer: 10192540.2
(22) Anmeldetag: 25.11.2010
(51) Int. Cl.: F01D 25/00, F01D 25/18, F02C 7/06, F01M 1/10, F01M 11/08

(54) **Anordnung zum Abführen von Ölentlüftungsluft bei einem Gasturbinentriebwerk**

(30) Priorität: 21.12.2009 DE 102009059019
(71) Anmelder: Rolls-Royce Deutschland Ltd & Co KG, 15827 Blankenfelde-Mahlow (DE)
(72) Erfinder: Thies, Robert, 14548 Schwielowsee (DE)

(57) **Zusammenfassung**

Bei einer Anordnung zum Abführen von aus einem Schmierölentlüftungssystem abgetrennter Ölentlüftungsluft (Ölluft) wird die kinetische Energie der Ölentlüftungsluft (Ö) mittels eines Diffusors auf einen oberhalb des Druckes des Abgasstroms (A) liegenden statischen Druck angehoben und danach mit dem Abgasstrom vermischt und mit diesem abgeführt. Die vom Schmierölentlüftungssystem kommende Entlüftungsleitung (10) mündet in einen in den vom Abgasstrom des Triebwerks umströmten Abgaskonus (9) integrierten Diffusor (13), dessen Ölluftauslassöffnung (14) unmittelbar oder über eine im Abgaskonus gebildete Beruhigungskammer (18) an den Abgasstrom angeschlossen ist. Auf diese Weise kann die Ölluft, und zwar ohne sichtbare Triebwerksteile zu verschmutzen, aus dem Triebwerk ins Freie ausgetragen werden sowie aufgrund der verkürzten Entlüftungsleitung eine Gewichtsreduzierung erreicht werden.

## Beschreibung

### Beschreibung

Die Erfindung betrifft eine Anordnung zum Abführen von über ein Schmierölentlüftungssystem abgetrennter und über Entlüftungsleitungen nach außen abgeführter Ölentlüftungsluft bei einem Gasturbinentriebwerk.

In den Lagergehäusen von Gasturbinentriebwerken vermischt sich das Schmieröl mit Sperrluft, die aus dem in den Öltank zurückgeführten Schmieröl bekanntermaßen mit Hilfe eines Schmierölentlüftungssystems abgetrennt und über eine Entlüftungsleitung und einen an der Außenseite der Triebwerksverkleidung oder der Verkleidung der Triebwerksaufhängung mündenden Entlüftungsauslass ins Freie gelangt. Die ausgeblasene Ölentlüftungsluft (Ölluft) enthält aber immer noch Ölbestandteile, die zu einer erheblichen, durch das Anhaften von Schmutz- und Staubpartikeln noch verstärkten Verschmutzung der Verkleidung des Triebwerks bzw. der Triebwerksaufhängung führen. Diese Verschmutzung ist aus ästhetischen Gründen unerwünscht und kann aufgrund des durch eine hohe Triebwerkstemperatur bedingten Einbrennens in die Verkleidung nur mit aufwändigen Reinigungsmaßnahmen wieder entfernt werden. Die bisher bekannten Vorschläge zur Lösung dieses Problems sind darauf gerichtet, die mit Öl verschmutzte Ölentlüftungsluft möglichst an einer von der Außenfläche der Verkleidung entfernten Position auszublasen, um den Kontakt der Ölluft mit der Oberfläche der Verkleidung zu vermeiden. Eine derartige Anordnung und Ausbildung der Ölluftauslässe, die aufgrund des während des Fluges auftretenden Luftwiderstandes noch aerodynamisch verkleidet werden müssen, ist wegen des damit verbundenen hohen Aufwandes und des durch die langen Entlüftungsleitungen bedingten zusätzlichen Gewichts nachteilig.

Der Erfindung liegt daher die Aufgabe zugrunde, eine Anordnung zum Abführen von über ein Schmierölentlüftungssystem abgetrennter und über Entlüftungsleitungen nach außen abgeführter Ölentlüftungsluft für ein Gasturbinentriebwerk so auszubilden, dass die Ölluft ohne Kontakt mit sichtbaren Triebwerksteilen mit vermindertem Aufwand sicher nach außen abgeführt wird.

Erfindungsgemäß wird die Aufgabe mit einer gemäß den Merkmalen des Patentanspruchs 1 ausgebildeten Anordnung gelöst Vorteilhafte Weiterbildungen der Erfindung sind Gegenstand der Unteransprüche.

Bei einer Anordnung der eingangs erwähnten Art zum Abführen von Ölentlüftungsluft besteht der Grundgedanke der Erfindung darin, dass die kinetische Energie der Ölentlüftungsluft mittels eines Diffusors auf einen oberhalb des Druckes des Abgasstroms liegenden statischen Druck angehoben wird und danach mit dem Abgasstrom vermischt und mit diesem abgeführt wird. Die vom Schmierölentlüftungssystem kommende Entlüftungsleitung mündet in einen in den vom Abgasstrom des Triebwerks umströmten Abgaskonus integrierten Diffusor, dessen große Ölluftauslassöffnung unmittelbar oder über eine im Abgaskonus gebildete Beruhigungskammer an den Abgasstrom angeschlossen ist. Auf diese Weise kann die Ölluft, und zwar ohne sichtbare Triebwerksteile zu verschmutzen, aus dem Triebwerk ins Freie ausgetragen werden. Da die Entlüftungsleitung bereits im Abgaskonus des Triebwerks endet, kann aufgrund deren verkürzter Länge eine erhebliche Gewichtsreduzierung erreicht werden.

In Ausgestaltung der Erfindung mündet die Ölluftauslassöffnung des Diffusors an der stromab liegenden Seite des Abgaskonus unmittelbar in den Abgasstrom, das heißt, der Diffusor wird in axialer Richtung durch den Abgaskonus hindurch geführt.

In weiterer Ausgestaltung der Erfindung mündet die Ölluftauslassöffnung des Diffusors in eine große Beruhigungskammer, die von einer Rückwand und der gesamten Außenwand des Abgaskonus begrenzt ist. In der Außenwand des Abgaskonus ist an einer für die Vermischung der Ölentlüftungsluft mit dem Abgasstrom (A) günstigen Position mindestens eine Ölluftaustrittsöffnung ausgebildet.

In weiterer Ausbildung der Erfindung mündet die Ölluftauslassöffnung des Diffusors in eine kleine Beruhigungskammer, die von einer am Umfang des Diffusors anschließ**e**nden Trennwand und dem stromab liegenden Teil der Außenwand des Abgaskonus begrenzt ist, wobei in diesem Teil der Außenwand an einer für die Vermischung der Ölentlüftungsluft mit dem Abgasstrom günstigen Position mindestens eine Ölluftaustrittsöffnung ausgebildet ist.

Ein Ausführungsbeispiel der Erfindung wird anhand der Zeichnung näher erläutert. Es zeigen:
- Fig. 1: eine schematische Schnittansicht eines mit einer Triebwerksverkleidung dargestellten Turbofantriebwerks;
- Fig. 2: eine Teilansicht des Abgaskonus mit einem an die Entlüftungsleitung angeschlossenen und durch den Abgaskonus geführten Diffusor;
- Fig. 3: eine Schnittansicht des Abgaskonus mit in dessen Innern in einer kleinen Beruhigungskammer mündendem Diffusor; und
- Fig. 4: eine Schnittansicht des als Ganzes eine Beruhigungskammer für die aus dem Diffusor austretende Ölluft bildenden Abgaskonus.

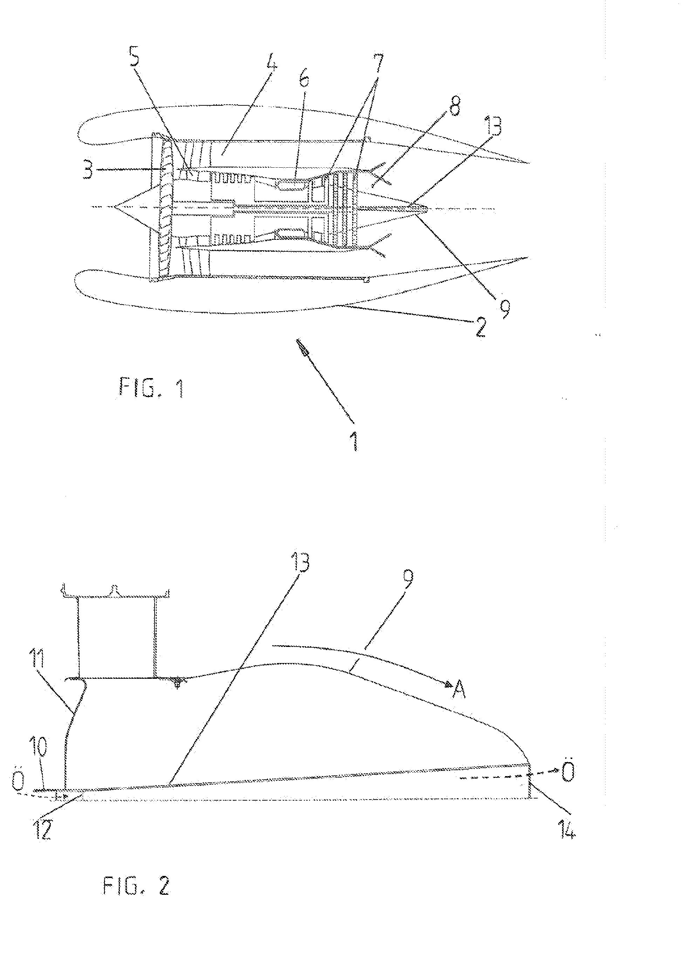

Das in Fig. 1 dargestellt Turbofantriebwerk 1 ist von einer Triebwerksverkleidung 2 umgeben, an deren Außenfläche gemäß dem Stand der Technik üblicherweise eine vom Schmierölentlüftungssystem kommende Entlüftungsleitung mündet. Das Triebwerk umfasst einen stromab des Fans 3 vorgesehenen Nebenstromkanal 4 sowie einen Kernstromkanal 5, der stromab der Brennkammer 6 und der Turbine 7 in einen nach innen durch den Abgaskonus 9 begrenzten Abgasstromkanal 8 übergeht.

Die mit dem Schmierölentlüftungssystem verbundene Entlüftungsleitung 10 mündet in die in der Rückwand 11 vorgesehene, kleinere Öllufteinlassöffnung 12 eines axial durch den Abgaskonus 9 geführten Diffusors 13, dessen große Ölluftauslassöffnung 14 am hinteren - stromab liegenden - Ende des Abgaskonus 9 ausgebildet ist. Aufgrund des sich erweiternden Strömungsquerschnitts der Ölluft im Diffusor 13 wird kinetische Energie in Druckenergie umgewandelt, so dass der statische Druck der Ölluft (Ölentlüftungsluft) an der Ölluftauslassöffnung 14 größer als der Abgasströmungsdruck ist. Die Ölluft (Pfeil Ö) kann sich daher mit dem Abgasstrom (Pfeil A) vermischen und wird mit diesem ausgetragen, ohne an irgendwelchen Bauteilen des Triebwerks Ölspuren zu hinterlassen. Da die Entlüftungsleitung 10 bereits an der Rückwand 11 des Abgaskonus 9 endet, ist sie deutlich kürzer als üblich, so dass das Triebwerksgewicht insgesamt verringert wird.

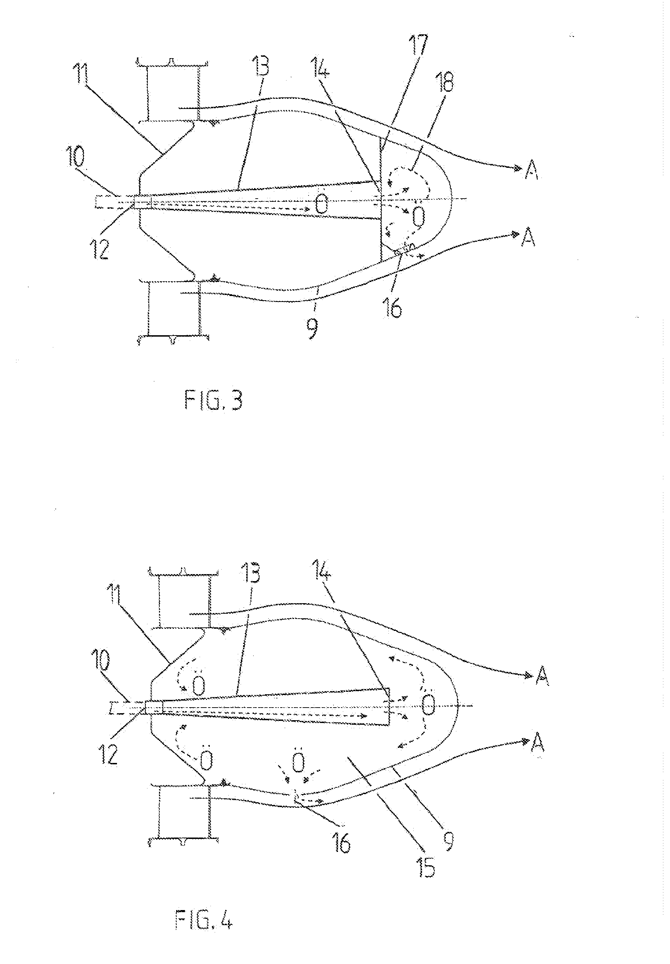

Die Figuren 3 und 4 zeigen noch zwei andere Ausführungsformen der Anordnung zum Abführen der Ölluft mit Hilfe eines Diffusors 13, dessen Ölluftauslassöffnung 14 sich jedoch innerhalb des Abgaskonus 9 befindet. Der von dem Abgaskonus 9 und dessen Rückwand 11 umschlossene Hohlraum bildet - wie Fig. 4 zeigt - eine große Beruhigungskammer 15 mit einer in der Wand des Abgaskonus vorgesehenen Ölluftaustrittsöffnung 16. Wie Fig. 3 zeigt, kann die Ölluftauslassöffnung 14 des Diffusors 13 auch in eine kleine, im hinteren Bereich des Abgaskonus 9 durch eine Trennwand 17 erzeugte Beruhigungskammer 18 münden, die in der Wand des Abgaskonus 9 eine Ölluftaustrittsöffnung 16 aufweist. Das Austragen der Ölluft (Pfeil Ö) über eine Beruhigungskammer 15 oder 18 ist insofern vorteilhaft, als die mindestens eine Ölluftaustrittsöffnungen 16 in einer Position angeordnet werden kann, in der die beste Vermischung der Ölluft (Pfeil Ö) mit dem Abgasstrom (Pfeil A) gewährleistet ist. Bei den Ausführungsvarianten gemäß Fig. 3 und 4 mit einer Beruhigungskammer 15 bzw. 18 ist die Ölluftauslassöffnung 14 des Diffusors 13 vor an dieser Stelle versehentlich zurückgelassenen fremden Objekten wie Schrauben oder dgl. geschützt.

### Bezugszeichenliste

- 1: Turbofantriebwerk
- 2: Triebwerksverkleidung
- 3: Fan
- 4: Nebenstromkanal
- 5: Kernstromkanal
- 6: Brennkammer
- 7: Turbine
- 8: Abgasstromkanal
- 9: Abgaskonus
- 10: Entlüftungsleitung
- 11: Rückwand
- 12: Öllufteinlassöffnung
- 13: Diffusor
- 14: Ölluftauslassöffnung
- 15: große Beruhigungskammer
- 16: Ölluftaustrittsöffnung in 9
- 17: Trennwand
- 18: kleine Beruhigungskammer

## Patentansprüche

1. Anordnung zum Abführen von über ein Schmierölentlüftungssystem abgetrennter und über Entlüftungsleitungen (10) nach außen abgeführter Ölentlüftungsluft bei einem Gasturbinentriebwerk mit an dessen hinterem Ende vorgesehenem, einen Abgasstromkanal (8) begrenzenden Abgaskonus (9), **dadurch gekennzeichnet, dass** die Entlüftungsleitung (10) zur Umwandlung der kinetischen Energie der Ölentlüftungsluft (Ö) in eine oberhalb des Abgasstromdruckes liegende statische Druckenergie in einen in den vom Abgasstrom (A) des Triebwerks umströmten Abgaskonus (9) integrierten Diffusor (13) mündet, dessen Ölluftauslassöffnung (14) unmittelbar oder über eine im Abgaskonus (9) gebildete Beruhigungskammer (15, 18) an den Abgasstrom (A) angeschlossen ist.

2. Anordnung nach Anspruch 1, **dadurch gekennzeichnet, dass** die Ölluftauslassöffnung (14) des Diffusors (13) an der stromab liegenden Seite des Abgaskonus (9) unmittelbar in den Abgasstrom (A) mündet.

3. Anordnung nach Anspruch 1, **dadurch gekennzeichnet, dass** die Ölluftauslassöffnung (14) des Diffusors (9) in eine große Beruhigungskammer (15) mündet, die von einer Rückwand (11) und der gesamten Außenwand des Abgaskonus (9) begrenzt ist, wobei in der Außenwand an einer für die Vermischung der Ölentlüftungsluft (Ö) mit dem Abgasstrom (A) günstigen Position mindestens eine Ölluftaustrittsöffnung (16) ausgebildet ist.

4. Anordnung nach Anspruch 1, **dadurch gekennzeichnet, dass** die Ölluftauslassöffnung (14) des Diffusors (9) in eine kleine Beruhigungskammer (18) mündet, die von einer am Umfang des Diffusors (9) anschließenden Trennwand (17) und dem stromab liegenden Teil der Außenwand des Abgaskonus (9) begrenzt ist, wobei in diesem Teil der Außenwand an einer für die Vermischung der Ölentlüftungsluft (Ö) mit dem Abgasstrom (A) günstigen Position mindestens eine Ölluftaustrittsöffnung (16) ausgebildet ist.
